# EUROPÄISCHE PATENTSCHRIFT

(11) **EP 2 364 762 B1**
(45) Veröffentlichungstag und Bekanntmachung des Hinweises auf die Patenterteilung: **02.03.2016**
(21) Anmeldenummer: 11001909.8
(22) Anmeldetag: 08.03.2011
(51) Int. Cl.: B01D 29/23, B01D 35/027

(54) **System zur Motorölbervorratung und- filtration an einer Brennkraftmaschine sowie Verfahren zur Motorölzirkulation und- filtration an einer Brennkraftmaschine**
System for providing and filtering motor oil to a combustion engine and method for circulating and filtering motor oil in a combustion engine
Système de réapprovisionnement et de filtration d'huile de moteur dans un moteur à combustion interne et procédé de circulation et de filtration d'huile de moteur dans un moteur à combustion interne

(30) Priorität: 12.03.2010 DE 102010011348
(43) Veröffentlichungstag der Anmeldung: 14.09.2011
(73) Patentinhaber: IBS Filtran Kunststoff-/Metallerzeugnisse GmbH, 51597 Morsbach (DE)
(72) Erfinder: Jaspers, Jörge, 51597 Morsbach (DE); Dedering, Michael, 51597 Morsbach (DE); Sahm, Dietmar, 51580 Reichshof (DE); Stausberg, Wolfgang, 51597 Morsbach (DE); Buchen, Marc, 51597 Morsbach (DE); Bernards, Daniel, 51789 Lindlar (DE)
(74) Vertreter: Kierdorf Ritschel Richly

(56) Entgegenhaltungen:
- EP-A1- 1 433 512
- DE-A1- 2 242 199
- DE-A1- 3 152 587
- US-A- 3 317 046

## Beschreibung

Die Erfindung betrifft ein System zur Motorölbevorratung und -filtration an einer Brennkraftmaschine umfassend wenigstens eine Ölbevorratungseinrichtung als Teil eines Motorölkreislaufs, wenigstens eine Filtrationseinrichtung sowie wenigstens eine Ölförderpumpe.

Bekannt sind vor allem Druckölfilter im Ölkreislauf von Verbrennungsmotoren. Diese Druckölfilter sind der Motorölpumpe nachgeschaltet und meist auswechselbar am Motorgehäuse oder am Zylinderkopf angebracht. Die herkömmlichen Ölfilter sind mit dem Nachteil behaftet, dass diese verhältnismäßig viel Bauraum beanspruchen, insbesondere da deren Zugangsmöglichkeit für den Servicefall zu beachten ist.

Oft sind Druckölfilter an einem Adapter angebracht, was weiteren Bauraum erforderlich macht und zusätzliche Kosten verursacht. Zu den Adaptionsstellen führen in der Regel lange Ölleitungen, die meist gebohrt werden müssen, was hohe Kosten wie auch zusätzliche Verschmutzungsgefahr durch Bohrrückstände im Motorblock und Zylinderkopf verursachen kann.

Nahezu alle Druckölfilter sind im Nebenstrom der Pumpe angeordnet, so dass verunreinigtes Öl erst nach und nach gereinigt wird (partial flow-Prinzip).

Um insbesondere bei kalten Betriebszuständen des Motors bzw. der Brennkraftmaschine das Filterelement von zu hohen Öldrucken freizuhalten, enthalten Druckölfiltereinrichtungen in der Regel ein Bypass-Ventil, so dass den Motorschmierstellen bei niedrigen Öltemperaturen zunächst ungefiltertes Öl zugeführt wird. Eine solche Anordnung ist aufwändig und verursacht zusätzliche Kosten.

Aus der DE 197 35 444 A1 ist ein Ölfiltereinsatz für Ölwannen von Motoren und Getrieben mit integrierter Saugölfiltration und Druckölfiltration bekannt, wobei auf einem Dichtungsträgerrahmen eine Filtereinheit zur Saugfiltration und eine Filtereinheit zur Druckfiltration von Motor- oder Getriebeölen angeordnet ist. Der in der DE 197 35 444 A1 beschriebene Ölfiltereinsatz wird zwar als für die Motorölfiltration geeignet beschrieben, dieser ist allerdings ausschließlich für die Getriebeölfiltration von Automatikgetrieben ausgelegt und verwendbar, insbesondere weil in Motorölkreisläufen von Brennkraftmaschinen wesentlich größere Motorölvolumenströme zirkuliert werden. Ein System zur Motorölbevorratung und Filtration an einer Brennkraftmaschine ist beispielsweise aus der DE 2 242 199 bekannt. Die DE 2 242 199 beschreibt einen Ölfilter für Verbrennungsmotoren mit einem in der Ölwanne des Motors über eine Ölablassöffnung angeordneten und über einen Deckel gehaltenen Filtereinsatz, wobei das Filtergehäuse innerhalb der Ölwanne festgelegt ist. Der Filtereinsatz ist in Förderrichtung des Öls einer Ölförderpumpe vorgeschaltet, wobei der Filtereinsatz ein Umgehungsventil aufweist. Das bekannte Filter soll die Vorteile an einer sich bekannten Hauptstromfilterbaueinheit mit den Vorteilen der platzsparenden und einen Saugkorb am Ölpumpensaugrohr erübrigenden Unterbringung des Filtereinsatzes in der Ölwanne in sich vereinigen.

Ein ähnliches Ölfilter ist beispielsweise aus der US 3, 317,046 bekannt, wobei dieses Filter ebenfalls mit Bypassventilen in Form von U-förmigen Metallstreifen versehen ist, die beim Überschreiten eines bestimmten Betrages an Druckverlusten öffnen, so dass auch dieses Filter dann nach dem Teilstromprinzip arbeitet.

Der Erfindung liegt die Aufgabe zugrunde, eine Saugölfiltration für einen Motorölkreislauf bereitzustellen, welche insbesondere hinsichtlich die bekannten Vorzüge hinsichtlich des benötigten Bauraums erfüllen und die trotzdem eine dauernde und vollständige Filtration des gesamten Motorölstroms bei entsprechend geringen Fließwiderständen bei allen Betriebszuständen des Kraftfahrzeugs beziehungsweise bei allen Viskositätsgraden des Öls gewährleistet.

Die Aufgabe wird gelöst mit den Merkmalen der unabhängigen Ansprüche. Vorteilhafte Ausgestaltungen der Erfindung ergeben sich aus den Unteransprüchen.

Erfindungsgemäß ist ein System zur Motorölbevorratung und Filtration an einer Brennkraftmaschine vorgesehen, umfassend wenigstens eine Ölbevorratungseinrichtung als Teil eines Motorölkreislaufs, wenigstens eine Filtrationseinrichtung sowie wenigstens eine Ölförderpumpe, wobei sich das System dadurch auszeichnet, dass die Filtrationseinrichtung bezogen auf die Förderrichtung des Öls der Ölpumpe vorgeschaltet ist. Ein solches System kann in vorteilhafter Art und Weise in die Motorölwanne integriert werden und nutzt dadurch bisher ungenutzten Bauraum im Kurbel- bzw. Motorengehäuse und der Ölwanne.

Unter Ölbevorratungseinrichtung im Sinne der Erfindung kann sowohl eine Ölwanne im herkömmlichen Sinn als auch ein Ölbehälter einer Trockensumpfschmierung zu verstehen sein.

Das erfindungsgemäße System hat weiterhin den Vorzug, dass die Anbringung der Filtrationseinrichtung in der Ölwanne keine weiteren Ölleitungen, Gewindebohrungen und Dichtstellen in bzw. am Motorgehäuse erforderlich macht.

Bei einer vorteilhaften Variante des Systems gemäß der Erfindung ist ausschließlich eine Saugfiltration vorgesehen. Entgegen bisheriger Meinungen ist es durchaus möglich, die Filtrationseinrichtung mit so geringen Fließwiderständen auszulegen, dass eine Druckölfiltration entbehrlich ist.

Bei einer vorteilhaften Variante des Systems gemäß der Erfindung ist die Filtrationseinrichtung im Hauptstrom der Ölförderpumpe angeordnet bzw. die Ölförderpumpe unmittelbar saugseitig an die Filtrationseinrichtung angeschlossen.

Die Filtrationseinrichtung ist zweckmäßigerweise innerhalb der Ölbevorratungseinrichtung angeordnet. Da die Filtrationseinrichtung selbst vollständig öldurchflutet ist, ist der damit einhergehende Volumenverlust innerhalb der Ölbevorratungseinrichtung bzw. Ölwanne verhältnismäßig gering.

Bei einer besonders zweckmäßigen Variante des Systems gemäß der Erfindung ist vorgesehen, dass die Filtrationseinrichtung als austauschbarer Filtereinsatz der Ölwanne ausgebildet ist.

Die Filtrationseinrichtung kann mit Ausnahme des Filtermediums auch als integraler Bestandteil der Ölwanne ausgebildet sein.

Beispielsweise kann die Filtrationseinrichtung über eine entsprechend ausgebildete Revisionsöffnung in der Ölwanne zugänglich sein. Bei einer besonders vorteilhaften Variante der Erfindung ist in dieser Revisionsöffnung auch eine Ölablasseinrichtung in Form einer in einem Revisionsdeckel angeordneten Ölablassschraube oder dergleichen angeordnet.

Zweckmäßigerweise umfasst der Filtereinsatz wenigstens ein Filtergehäuse und wenigstens ein in dem Filtergehäuse vorgesehenes Filterelement.

Erfindungsgemäß ist vorgesehen, dass das Filterelement in Strömungsrichtung des Öls wenigstens eine erste und eine zweite Filtrationslage umfasst, wobei das Filtermedium der ersten Filtrationslage in bezug auf das Filtermedium der zweiten Filtrationslage dichter beschaffen ist. Beispielsweise kann das Filtermedium der ersten Filtrationslage als verhältnismäßig dichtes Filtervlies oder Filtergewebe ausgebildet sein, das Filtermedium der zweiten Filtrationslage kann beispielsweise als offenes Filtersieb ausgebildet sein.

Erfindungsgemäß ist vorgesehen, dass die erste und die zweite Filtrationslage bereichsweise voneinander beabstandet sind und die erste Filtrationslage in den von der zweiten Filtrationslage beabstandeten Bereichen mit Strömungsbypässen versehen ist. Auf diese Art und Weise wird insbesondere bei kaltem Motoröl gewährleistet, dass der Fließwiderstand der Filtrationseinrichtung in vorgegebenen Grenzen gehalten wird.

Erfindungsgemäß ist vorgesehen, als Strömungsbypässe eine Durchtrittslochung in der ersten Filtrationslage vorzusehen. Bei verhältnismäßig kaltem Motoröl wird ein Teil des Öls zunächst durch die Durchtrittslochung in der ersten Filtrationslage hindurchfließen, wobei dieses Öl einer Feinfiltration mittels der zweiten Filtrationslage unterzogen wird. Die erste Filtrationslage hingegen unterzieht das Öl einer Feinstfiltration. Die erwünschte Ölreinheit wird insgesamt dadurch erzeugt, dass das Öl mit ansteigender Temperatur, womit eine stetig geringer werdende Viskosität einhergeht, zunehmend durch das Filtermedium der ersten Filtrationslage geleitet wird. Der Mengenanteil des durch des Öffnungen des ersten Filtermediums fließenden Öls nimmt mit zunehmender Temperatur kontinuierlich ab.

Die Durchtrittslochung der ersten Filtrationslage ist in Form und Größe so abgestimmt, wie es der jeweilige Einsatzfall bzw. Motortyp vorgibt. Zu den Auslegungsparametern gehören im wesentlichen die Pumpensaugleistung, die Pumpenförderleistung, der durch den Betrieb spezifisch anfallende Schmutzeintrag in das Öl und die Viskosität des verwendeten Öls.

Vorzugsweise ist die erste Filtrationslage gefältelt (Plisee). Die Durchtrittslochung kann sowohl im Bereich der Falze der Fältelung als auch im Bereich von Flanken der Falten vorgesehen sein. Die Durchtrittslochung kann jede Größe, Form und Anordnung aufweisen. Das trifft sowohl für die Gestalt der Löcher selbst als auch für die Anordnung der Durchtrittslochung in der Filtrationslage zu. Die kann in Form eines wiederkehrenden Musters auf der Filtrationslage vorgesehen sein. Die Anordnung der Durchtrittslochung kann sowohl symmetrisch als auch unsymmetrisch sein.

Die erste Filtrationslage kann beispielsweise in Form einer zylindrischen, plissierten Filterpatrone vorgesehen sein, die von einer zweiten Filtrationslage beispielsweise in Form eines zylindrischen Metallgitters umschlossen ist.

Zwischen der ersten und der zweiten Filtrationslage sind vorteilhafterweise jeweils Kammern vorgesehen, deren Begrenzungswände teilweise von den Flanken der Falten der ersten Filtrationslage gebildet werden. Die Kammern werden definiert durch die Flanken der Falten der ersten Filtrationslage und der von der zweiten Filtrationslage definierten Mantelfläche.

Bei einer zweckmäßigen Variante des Systems gemäß der Erfindung ist vorgesehen, dass das Filtergehäuse wenigstens einen Ansaugstutzen zum saugseitigen Anschluss der Ölpumpe aufweist.

Bei einer vorteilhaften Ausgestaltung des erfindungsgemäßen Systems ist vorgesehen, dass die in der Filtrationseinrichtung erzeugten Druckverluste unter normalen Betriebsbedingungen ≤ 400 mbar betragen.

Zweckmäßigerweise ist das Filtergehäuse an der tiefsten Stelle der Ölwanne angeordnet.

Vorzugsweise umfasst das Filtergehäuse wenigstens einen Nebenströmungskanal, den den Ansaugstutzen unmittelbar an den in Einbaulage oberen Bereich des Filtergehäuses anschließt. Der Ansaugstutzen kann beispielsweise in den unteren Teil bzw. unteren Bereich des Filtergehäuses münden. Über den Nebenströmungskanal wird vorzugsweise unter Ausnutzung des Venturi-Effektes sich etwa im oberen Bereich des Filtergehäuses unter Umständen ansammelnde Luft/ansammelndes Gas so in den Hauptansaugstrom der Ölpumpe gezogen, dass eine Kavitation an der Pumpe zuverlässig verhindert wird.

Die Erfindung betrifft weiterhin einen Filtereinsatz mit den Merkmalen eines der vorstehenden Ansprüche.

Die der Erfindung zugrundeliegende Aufgabe wird schließlich gelöst durch ein Verfahren zur Motorölzirkulation und -filtration an einer Brennkraftmaschine, welches sich dadurch auszeichnet, dass das Motoröl ausschließlich einer Saugölfiltration unterzogen wird.

Erfindungsgemäß erfolgt die Filtration des Motoröls mehrstufig, wobei eine erste Filtration mit einem verhältnismäßig dichten Filtermedium und eine zweite Filtration mit einem verhältnismäßig offenen Filtermedium durchgeführt wird.

Die Erfindung wird nachstehend anhand eines in den Zeichnungen dargestellten Ausführungsbeispiels erläutert:

Es zeigen:
- Fig. 1: einen Schnitt durch eine Filtrationseinrichtung gemäß der Erfindung in der Einbausituation,
- Fig. 2: eine Schnittansicht durch das Filtergehäuse und
- Fig. 3: eine Explosionsansicht des in das Filtergehäuse eingesetzten Filterelements.

Der Filtereinsatz 1 gemäß der Erfindung umfasst ein Filtergehäuse 2 aus thermoplastischem Kunststoff sowie ein in das Filtergehäuse 2 eingesetztes Filterelement 3.

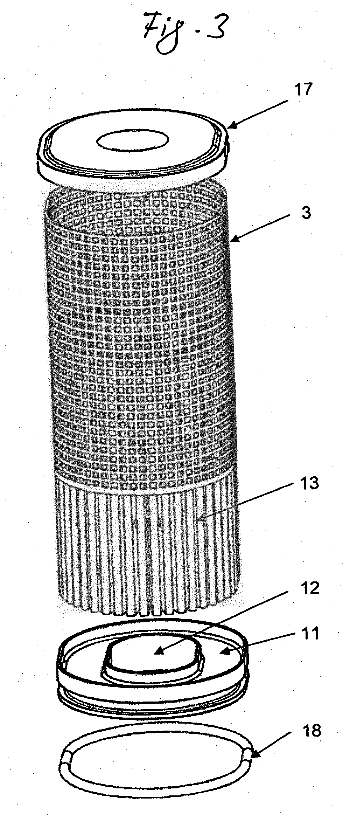

Der Filtereinsatz 1 ist innerhalb einer Ölwanne 4 einer Brennkraftmaschine eines PKW oder LKW im Bereich einer Revisionsöffnung 5 der Ölwanne 4 angeordnet. Die Revisionsöffnung 5 befindet sich an der in Einbaulage der tiefsten Stelle der Ölwanne 4 und ist mit einem Revisionsdeckel 6 verschlossen. Das Filtergehäuse 2 definiert einen etwa zylinderförmigen Aufnahmeraum für das Filterelement 3, welches ebenfalls, wie dies in Fig. 3 dargestellt ist, zylindrisch ist. Entsprechend gestaltet sind die Revisionsöffnung 5 sowie der Revisionsdeckel 6, der mit einem zentralen Ölablassöffnung 7 versehen ist, welche wiederum mit einer Ölablassschraube 8 unter Zwischenlage einer O-Ring-Dichtung 9 verschlossen ist.

Das Filterelement 3 wird über an dem Revisionsdeckel 6 angebrachte Stege 10 in seiner Lage bezüglich des Filtergehäuses 2 gehalten. Die Stege 10 stützen sich gegen einen in Einbaulage unteren Deckel 11 des Filterelementes 3 ab. Über die Stege 10 wird gleichzeitig auch der Abstand zwischen dem Filterelement 3 und dem Revisionsdeckel 6 definiert, derart, dass der Einlauf 12 des Filterelements 3 freigehalten wird.

Das Filterelement 3 ist in der Explosionsansicht in Fig. 3 dargestellt. Dieses umfasst ein erstes, inneres Filtermedium 13 in Form eines plissierten Gewebe-oder Vliesfilters sowie ein das erste Filtermedium 13 umgebendes zweites Filtermedium 14 in Form eines Drahtkorbes bzw. Drahtgitters. In der Zeichnung sind die Maschenabstände des zweiten Filtermediums übertrieben groß dargestellt.

Das erste Filtermedium 13 ist als Feinstfiltermedium ausgebildet, wohingegen das zweite Filtermedium 14 als Feinfiltermedium ausgebildet ist. Das erste Filtermedium 13 ist als verhältnismäßig dichtes Filtermedium ausgebildet, wohingegen das zweite Filtermedium 14 als verhältnismäßig offenes Filtermedium ausgebildet ist.

Bei dem beschriebenen Ausführungsbeispiel durchströmt das zu filternde Motoröl zunächst das erste Filtermedium 13, sodann das zweite Filtermedium 14. Das Öl fließt vom Zentrum des Filterelementes 3 nach außen in das Filtergehäuse 2 und von dort zu der nicht dargestellten Ölpumpe, wie nachstehend noch erläutert wird.

Im Rahmen der Erfindung ist allerdings auch ein Ölfluss von außen durch die Filtermedien in das Zentrum des Filterelementes 3 und von dort zur Ölpumpe möglich. Dies setzt eine entsprechende Anordnung der Filtermedien zueinander voraus.

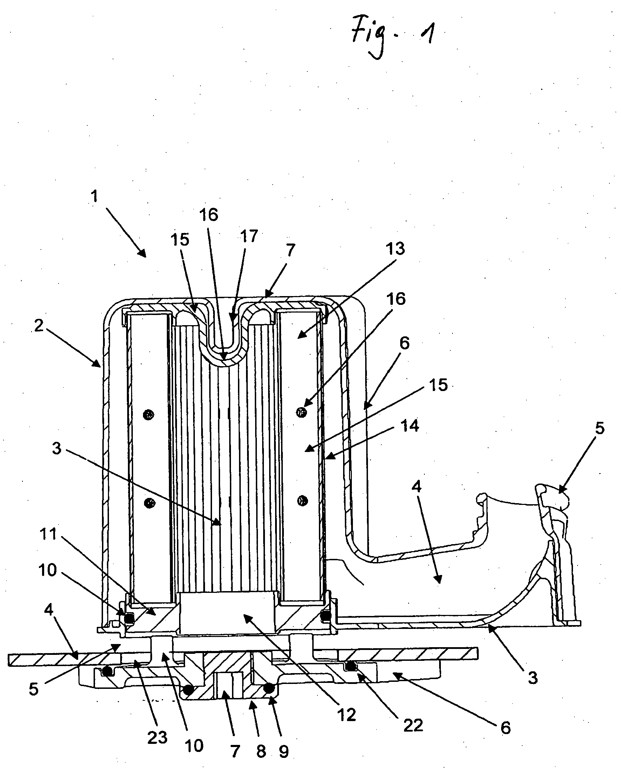

Wie dies insbesondere aus den Figuren 3 und 1 in der Zusammenschau ersichtlich ist, ist das erste Filtermedium 13 plissiert (gefältelt), wobei die Flanken 15 des ersten Filtermediums 13 mit einer Durchtrittslochung 16 versehen sind.

Bei dem beschriebenen Ausführungsbeispiel sind die Durchtrittslochungen so gewählt, dass sich zwei umlaufende Lochkanäle ergeben, wobei Größe und Anordnung der Durchtrittslochung sowie die Anzahl der Löcher Auslegungssache sind. Jeweils zwei gegenüberliegende Flanken 15 des ersten Filtermediums sowie die zugehörige Mantelfläche des zweiten Filtermediums 14 definieren eine Kammer mit etwa dreieckigem Querschnitt. Im Bereich einer jeden Kammer ist das erste Filtermedium 13 von dem zweiten Filtermedium 14 beabstandet. Durch die plissierte Ausführung des ersten Filtermediums 13 ergibt sich über den Umfang des ersten Filtermediums 13 eine Vielzahl von Falten und Kammern.

Wie dies aus Fig. 3 ersichtlich ist, umhüllt das zweite Filtermedium 14 das erste Filtermedium 13. Die Anordnung wird durch einen oberen Deckel 17 und den unteren Deckel 11 zusammengehalten und bilden eine Filterpatrone/Filterelement 3, welches lösbar in das ortsfest in der Ölwanne 4 angeordnete Filtergehäuse 2 eingesetzt ist und über die Stege 10 in dem Filtergehäuse 2 gehalten wird. Insbesondere das erste Filtermedium kann beispielsweise mit dem oberen und unteren Deckel 17, 11 stoffflüssig verbunden sein.

Das zweite Filtermedium 14 kann sowohl aus Stahl/Edelstahl als auch beispielsweise als Polyamid-Gitter ausgebildet sein.

Der untere Deckel 11 des Filterelementes 3 ist mit einer O-Ring-Dichtung 18 gegen einen als Kragen ausgebildeten Dichtsitz 19 des Filtergehäuses 2 abgedichtet. Innerhalb des Filtergehäuses 2 ist das Filterelement 3 mittels eines gehäuseeinwärts ragenden Zapfens 20 zentriert.

Nach Lösen des Revisionsdeckels 6 der Ölwanne 4 lässt sich dass Filterelement 3 als Ganzes aus dem Filtergehäuse 2 zwecks Austausch herauslösen bzw. herausnehmen.

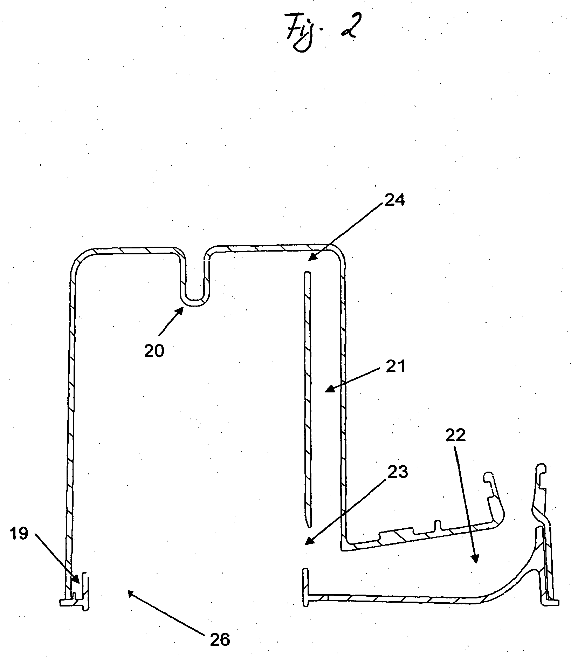

Das Filtergehäuse 2 (Bezugnahme auf Fig. 2) umfasst einen Nebenstromkanal 21, der sich von der obersten Begrenzung des Filtergehäuses 2 in einen Ansaugstutzen 22 erstreckt, welcher unmittelbar an die Saugseite einer nicht dargestellten Motorölpumpe angeschlossen ist. Der Ansaugstutzen 22 mündet darüber hinaus unmittelbar in den unteren Teil des Filtergehäuses 2 über die Ansaugöffnung 23. Im oberen Bereich des Filtergehäuses 2 ist der Nebenstromkanal 21 über die Ansaugöffnung 24 an das für das Filterelement 3 vorgesehene Volumen des Filtergehäuses 2 angeschlossen. Die untere Ansaugöffnung 23 ist größer bemessen als die Ansaugöffnung 24, sodass der durch die Ansaugöffnung 24 angesaugte Hauptölstrom einen Sog in dem Nebenströmungskanal 21 erzeugt, mit der Wirkung, dass sich eventuell im oberen Bereich des Filtergehäuses 2 ansammelnde Luft, beispielsweise nach einem Öleinfüllvorgang oder bei schäumenden Öl teilweise so mit in den Ansaugstutzen 22 gezogen wird, dass eine Kavitation an der Motorölpumpe zuverlässig vermieden wird.

Aufgrund des von der Motorölpumpe erzeugten Unterdrucks wird das Motoröl durch den Einlauf 12, der als ovale Einlauföffnung in dem unteren Deckel 11 des Filterelementes 3 ausgebildet ist, in das Innere des ersten Filtermediums 13 hineingezogen. Von dort durchströmt das Motoröl das erste Filtermedium 13 und durchdringt anschließend das dieses überlagernde zweite Filtermedium 14, wobei eine Teilmenge des Motoröls in kaltem Zustand die Durchtrittslochung 16 durchströmt und durch die von den Falten des ersten Filtermediums 13 erzeugten Taschen/Kammern unmittelbar durch das zweite Filtermedium 14 hindurchtritt. Mit zunehmender Erwärmung des Öls durchdringt dieses das verhältnismäßig dichte Filtergewebe/Filtervlies des ersten Filtermediums 13 außerhalb der Durchtrittslochung, wodurch zunächst eine Feinstfiltration bewirkt wird.

Aufgrund der Mehrstufigkeit des Filterelements 3, insbesondere durch das Bereitstellen einer Durchtrittslochung 16 mit Abstand zu dem zweiten Filtermedium 14 ist es möglich, den Fließwiderstand vor der Ölpumpe bzw. den Fließwiderstand der gesamten Filtrationseinrichtung verhältnismäßig gering zu halten, so dass zuverlässig eine Kavitation an der Pumpe vermieden wird.

Durch die Lage des Filtereinsatzes 1 an der tiefsten Stelle im Motor in Verbindung mit der direkt darunter liegenden Ölablassvorrichtung, wird bei einem Filterwechsel der dem Filterelement 3 eventuell lose anhaftende Schmutz sicher vom herausfließenden Öl mitgenommen und aus der Ölwanne herausgespült.

Die Zugänglichkeit des Systems bei einem Filterwechsel ist gewährleistet und nicht mit großem Aufwand verbunden, da bei dem dazugehörigen Ölwechsel ohnehin an dieser Position gearbeitet werden muss, wenn das Öl abgelassen wird. Der Zugang zu dem Filtereinsatz 1 selbst erfolgt auf einfache Weise durch den Revisionsdeckel 6, der von außen mit der Ölwanne 4 verschraubt ist.

Die Betriebssicherheit wird dadurch erhöht, dass die Anzahl von Leckagestellen vom Motor zur Umwelt hin verringert werden. Zusätzlich wird die Ölpumpe vor Beschädigungen geschützt, die durch ungefiltertes Öl auftreten können. Bedingt durch den geringen Fließwiderstand, den das Filterelement 3 erzeugt, benötigt die Ölpumpe eine geringere Antriebsleistung als bei einer herkömmlichen Druckölfiltration. Dadurch steigt die Effizienz der Pumpe und damit des Motors insbesondere bei kaltem Motor.

### Bezugszeichenliste

- 1: Filtereinsatz
- 2: Filtergehäuse
- 3: Filterelement
- 4: Ölwanne
- 5: Revisionsöffnung
- 6: Revisionsdeckel
- 7: Ölablassöffnung
- 8: Ölablassschraube
- 9: O-Ring-Dichtung
- 10: Stege
- 11: unterer Deckel Filterelement
- 12: Einlauf
- 13: erstes Filtermedium
- 14: zweites Filtermedium
- 15: Flanken
- 16: Durchtrittslochung
- 17: oberer Deckel
- 18: O-Ring-Dichtung
- 19: Dichtsitz
- 20: Zapfen
- 21: Nebenströmungskanal
- 22: Ansaugstutzen
- 23: Ansaugöffnung
- 24: Ansaugöffnung

## Patentansprüche

1. System zur Motorölbevorratung und -filtration an einer Brennkraftmaschine umfassend wenigstens eine Ölbevorratungseinrichtung als Teil eines Motorölkreislaufs, wenigstens eine Filtrationseinrichtung sowie wenigstens eine Ölförderpumpe, wobei die Filtrationseinrichtung bezogen auf die Förderrichtung des Öls der Ölförderpumpe vorgeschaltet ist, **dadurch gekennzeichnet, dass** das Filterelement (3) in Strömungsrichtung des Öls wenigstens eine erste und eine zweite Filtrationslage umfasst, wobei das Filtermedium (13) der ersten Filtrationslage in Bezug auf das Filtermedium (14) der zweiten Filtrationslage dichter beschaffen ist so daß das erste Filtermedium als Feinstfiltermedium ausgebildet ist, Wobingegen das zweite Filtermedium als Feinfiltermedium ausgebildet ist und dass die erste und zweite Filtrationslage bereichsweise voneinander beabstandet sind und dass die erste Filtrationslage in den von der zweiten Filtrationslage beabstandeten Bereichen mit Strömungsbypässen versehen ist, wobei als Strömungsbypässe eine Durchtrittslochung (16) in der ersten Filtrationslage vorgesehen ist.

2. System nach Anspruch 1, **dadurch gekennzeichnet, dass** ausschließlich eine Saugölfiltration vorgesehen ist.

3. System nach einem der Ansprüche 1 oder 2, **dadurch gekennzeichnet, dass** die Filtrationseinrichtung im Hauptförderstrom der Ölpumpe angeordnet ist.

4. System nach einem der Ansprüche 1 bis 3, **dadurch gekennzeichnet, dass** die Filtrationseinrichtung innerhalb der Ölbevorratungseinrichtung angeordnet ist.

5. System nach einem der Ansprüche 1 bis 4, **dadurch gekennzeichnet, dass** die Ölbevorratungseinrichtung als Ölwanne (4) ausgebildet ist.

6. System nach Anspruch 5, **dadurch gekennzeichnet, dass** die Filtrationseinrichtung als austauschbarer Filtereinsatz (1) der Ölwanne (4) ausgebildet ist.

7. System nach Anspruch 6, **dadurch gekennzeichnet, dass** der Filtereinsatz (1) wenigstens ein Filtergehäuse (2) und wenigstens ein in dem Filtergehäuse (2) vorgesehenes Filterelement (3) umfasst.

8. System nach einem der Ansprüche 5 bis 7, **dadurch gekennzeichnet, dass** die erste Filtrationslage ein gefältetes Filtermedium (Plisee) umfasst und dass die Durchtrittslochung (16) jeweils im Bereich von Flanken (15) der Falten vorgesehen ist.

9. System nach einem der Ansprüche 1 bis 8, **dadurch gekennzeichnet, dass** zwischen
der ersten und der zweiten Filtrationslage jeweils Kammern vorgesehen sind, deren Begrenzungswände teilweise von den Flanken (15) der Falten der ersten Filtrationslage gebildet werden.

10. System nach einem der Ansprüche 5 bis 9, **dadurch gekennzeichnet, dass** das Filtergehäuse (2) wenigstens einen Ansaugstutzen (22) zum saugseitigen Anschluss der Motorölförderpumpe aufweist.

11. System nach einem der Ansprüche 1 bis 8, **dadurch gekennzeichnet, dass** die in der Filtrationseinrichtung erzeugten Druckverluste unter normalen Betriebsbedingungen ≤ 400 mbar betragen.

12. System nach einem der Ansprüche 7 bis 11, **dadurch gekennzeichnet, dass** das Filtergehäuse (2) wenigstens einen Nebenströmungskanal (21) umfasst, der den Ansaugstutzen (22) unmittelbar an einen in Einbaulage oberen Bereich des Filtergehäuses (2) anschließt.

13. System nach einem der Ansprüche 7 bis 11, **dadurch gekennzeichnet, dass** das Filtergehäuse (2) an der tiefsten Stelle der Ölwanne (4) angeordnet ist.

14. Verfahren zur Motorölzirkulation und filtration an einer Brennkraftmaschine unter Verwendung eines Systems zur Motorölbevorraterung und -filtration an einer Brennkraftmaschine nach Anspruch 1, **dadurch gekennzeichnet, dass** das Motoröl ausschließlich einer Saugfiltration unterzogen wird, wobei die Filtration des Motoröls mehrstufig erfolgt und wobei eine erste Filtration mit einem verhältnismäßig dichten Filtermedium und eine zweite Filtration mit einem verhältnismäßig offenen Filtermedium durchgeführt wird.

## Claims

1. System for engine oil storage and filtration in an internal combustion engine, comprising at least one oil storage device as part of an engine oil circuit, at least one filtration device, and at least one oil delivery pump,wherein the filtration device is connected upstream of the oil delivery pump in relation to the delivery direction of the oil, **characterized in that** the filter element (3) comprises, in the flow direction of the oil, at least one first and one second filtration layer, the filter medium (13) of the first filtration layer being more dense than the filter medium (14) of the second filtration layer so that the first filter medium is designed as an extra-fine filter medium, whereas the second filter medium is designed as a fine filter medium, and **in that** the first and second filtration layers are spaced apart from one another in regions and **in that** the first filtration layer is provided with flow bypasses in the regions spaced apart from the second filtration layer, wherein a passage hole arrangement (16) is provided, as flow bypasses, in the first filtration layer.

2. System according to Claim 1, **characterized in that** only suction filtration is provided.

3. System according to either of Claims 1 and 2, **characterized in that** the filtration device is arranged in the main delivery flow of the oil pump.

4. System according to one of Claims 1 to 3, **characterized in that** the filtration device is arranged within the oil storage device.

5. System according to one of Claims 1 to 4, **characterized in that** the oil storage device is designed as an oil pan (4).

6. System according to Claim 5, **characterized in that** the filtration device is designed as an exchangeable filter insert (1) of the oil pan (4).

7. System according to Claim 6, **characterized in that** the filter insert (1) comprises at least one filter housing (2) and at least one filter element (3) provided in the filter housing (2).

8. System according to one of Claims 5 to 7, **characterized in that** the first filtration layer comprises a folded filter medium (pleated) and **in that** the passage hole arrangement (16) is provided in each case in the region of flanks (15) of the folds.

9. System according to one of Claims 1 to 8, **characterized in that** chambers are provided in each case between the first and the second filtration layer, the delimiting walls of which are formed partially by the flanks (15) of the folds of the first filtration layer.

10. System according to one of Claims 5 to 9, **characterized in that** the filter housing (2) has at least one intake connecting piece (22) for the suction-side connection of the engine oil delivery pump.

11. System according to one of Claims 1 to 8, **characterized in that** the pressure losses generated in the filtration device under normal operating conditions are ≤ 400 mbar.

12. System according to one of Claims 7 to 11, **characterized in that** the filter housing (2) comprises at least one partial-flow duct (21) which connects the intake connecting piece (22) directly to an, in the installed position, upper region of the filter housing (2).

13. System according to one of Claims 7 to 11, **characterized in that** the filter housing (2) is arranged at the lowest point of the oil pan (4).

14. Method for engine oil circulation and filtration in an internal combustion engine using a system for engine oil storage and filtration in an internal combustion engine according to Claim 1, **characterized in that** the engine oil is subjected to only suction filtration, wherein the filtration of the engine oil takes place in multiple stages and wherein a first filtration is carried out with a relatively dense filter medium and a second filtration is carried out with a relatively open filter medium.

## Revendications

1. Système servant au réapprovisionnement et à la filtration de l'huile moteur au niveau d'un moteur à combustion interne, comprenant au moins un dispositif de réapprovisionnement d'huile faisant partie intégrante d'un circuit d'huile moteur, au moins un dispositif de filtration ainsi qu'au moins une pompe de refoulement d'huile, sachant que le dispositif de filtration est installé en amont de la pompe de refoulement d'huile par rapport à la direction de refoulement de l'huile, **caractérisé en ce que** l'élément filtrant (3) comprend, dans la direction d'écoulement de l'huile, au moins une première couche de filtration et une deuxième couche de filtration, sachant que le milieu filtrant (13) de la première couche de filtration est de nature plus étanche par rapport au milieu filtrant (14) de la deuxième couche de filtration de sorte que le premier milieu filtrant est réalisé sous la forme d'un milieu filtrant le plus précis tandis que le deuxième milieu filtrant est réalisé sous la forme d'un milieu filtrant précis, et **en ce que** la première et la deuxième couche de filtration sont tenues à distance l'une de l'autre par endroits, et **en ce que** la première couche de filtration est pourvue, dans les zones tenues à distance de la deuxième couche de filtration, de dérivations d'écoulement, sachant qu'une perforation de passage (16) est prévue dans la première couche de filtration en tant que dérivations d'écoulement.

2. Système selon la revendication 1, **caractérisé en ce qu'**est prévue exclusivement une filtration d'huile par aspiration.

3. Système selon l'une quelconque des revendications 1 ou 2, **caractérisé en ce que** le dispositif de filtration est disposé dans le flux de refoulement principal de la pompe à huile.

4. Système selon l'une quelconque des revendications 1 à 3, **caractérisé en ce que** le dispositif de filtration est disposé à l'intérieur du dispositif de réapprovisionnement d'huile.

5. Système selon l'une quelconque des revendications 1 à 4, **caractérisé en ce que** le dispositif de réapprovisionnement d'huile est réalisé sous la forme d'une cuve à huile (4).

6. Système selon la revendication 5, **caractérisé en ce que** le dispositif de filtration est réalisé sous la forme d'un insert filtrant (1) remplaçable de la cuve à huile (4).

7. Système selon la revendication 6, **caractérisé en ce que** l'insert filtrant (1) présente au moins un boîtier filtrant (2) et au moins un élément filtrant (3) prévu dans le boîtier filtrant (2).

8. Système selon l'une quelconque des revendications 5 à 7, **caractérisé en ce que** la première couche de filtration comprend un milieu filtrant plié (Plisee), et **en ce que** la perforation de passage (16) est prévue respectivement dans la zone de flancs (15) des plis.

9. Système selon l'une quelconque des revendications 1 à 8, **caractérisé en ce que** sont prévus, entre la première couche de filtration et la deuxième couche de filtration, respectivement des compartiments, dont les parois de délimitation sont formées en partie par les flancs (15) des plis de la première couche de filtration.

10. Système selon l'une quelconque des revendications 5 à 9, **caractérisé en ce que** le boîtier filtrant (2) présente au moins une tubulure d'aspiration (22) servant au raccordement côté aspiration de la pompe de refoulement d'huile moteur.

11. Système selon l'une quelconque des revendications 1 à 8, **caractérisé en ce que** les pertes de pression produites dans le dispositif de filtration présentent une valeur ≤ 400 mbar dans des conditions normales de fonctionnement.

12. Système selon l'une quelconque des revendications 7 à 11, **caractérisé en ce que** le boîtier filtrant (2) comprend au moins un canal d'écoulement secondaire (21), qui raccorde la tubulure d'aspiration (22) directement à une zone supérieure dans la couche de montage du boîtier filtrant (2).

13. Système selon l'une quelconque des revendications 7 à 11, **caractérisé en ce que** le boîtier filtrant (2) est disposé au niveau de l'emplacement le plus profond de la cuve à huile (4).

14. Procédé servant à faire circuler et à filtrer l'huile moteur au niveau d'un moteur à combustion interne en utilisant un système servant au réapprovisionnement et à la filtration d'huile moteur au niveau d'un moteur à combustion interne selon la revendication 1, **caractérisé en ce que** l'huile moteur est soumise exclusivement à une filtration par aspiration, sachant que à filtration de l'huile moteur est effectuée en plusieurs phases et sachant qu'une première filtration est exécutée à l'aide d'un milieu filtrant proportionnellement étanche et qu'une deuxième filtration est exécutée à l'aide d'un milieu filtrant proportionnellement ouvert.
